# EUROPÄISCHE PATENTANMELDUNG

(11) **EP 1 333 652 A1**
(43) Veröffentlichungstag der Anmeldung: **06.08.2003**
(21) Anmeldenummer: 02023373.0
(22) Anmeldetag: 18.10.2002
(51) Int. Cl.: H04M 3/487, G06F 17/30, H04M 3/428

(54) **Verfahren sowie Vorrichtung zur Bereitstellung von Informationen**

(30) Priorität: 30.01.2002 DE 10203773; 19.03.2002 DE 10212212
(71) Anmelder: Beyer, Wolfgang, 40723 Hilden (DE)
(72) Erfinder: Beyer, Wolfgang, 40723 Hilden (DE)
(74) Vertreter: Stenger, Watzke & Ring Patentanwälte

(57) **Zusammenfassung**

Die Erfindung betrifft ein Verfahren zur Bereitstellung von Informationen für ein Informationsvermittlungssystem, eine Telekommunikationsanlage oder dergleichen. Um ein Verfahren anzugeben, mit dem auf einfache Weise Informationen für ein Informationsvermittlungssystem, eine Telekommunikationsanlage oder dergleichen bereitgestellt werden können und das hilft, den Wartungsaufwand sowohl hinsichtlich der Bereitstellung der Informationen als auch bezüglich ihrer inhaltlichen Überprüfung zu verringern, wird mit der Erfindung ein Verfahren vorgeschlagen, bei dem gemäß vorgebbarer Parameter die von einer zentral angeordneten Speichereinheit zur Verfügung gestellten Informationen auf Anfrage wunschgemäß abgerufen, unter Verwendung eines entsprechenden Speichermediums zwischengespeichert und bedarfsgerecht in das Informationsvermittlungssystem, die Telekommunikationsanlage oder dergleichen eingespielt werden.

## Beschreibung

Die Erfindung betrifft ein System zur Bereitstellung von Informationen für ein Informationsvermittlungssystem, eine Telekommunikationsanlage oder dergleichen, wobei die Erfindung sowohl ein Verfahren einerseits als auch eine Vorrichtung andererseits betrifft.

Vorbekannte Systeme sind aus dem Stand der Technik bekannt und haben sich im Praxiseinsatz in vielerlei Ausgestaltungsformen bewährt. So ist es beispielsweise bekannt, Telekommunikationsanlagen mit Informationen in Form von Ansagetexten oder Musik bereitstellenden Vorrichtungen zu kombinieren, so daß ein von außen hereinkommender Anruf zunächst durch Einspielen der zuvor bestimmten Musikoder Textinformation entgegengenommen wird. Auch können etwaig auftretende Wartezeiten, die beispielsweise infolge einer internen Rufumschaltung innerhalb der Telekommunikationsanlage zustande kommen können, durch die Einspielung vorausgewählter Textansagen oder Musikstücke überbrückt und in ihrer Zeitdauer subjektiv verkürzt werden. Eingespielt werden können beispielsweise Ansagetexte, die den Anrufer darauf verweisen, daß eine Entgegennahme seines Gespräches derzeit noch nicht möglich ist, daß eine Bearbeitung aber alsbald erfolgen wird. Alternativ können zur Überbrückung der Wartezeit auch Musikstücke eingespielt werden, die kombiniert mit einer zusätzlichen Textbotschaft auf die Annahme und baldige Weiterleitung des Anrufes hinweisen.

Zudem sind aus dem Stand der Technik Anrufbeantwortersysteme bekannt, die es einem Anrufenden ermöglichen, Textnachrichten für den Fall zu hinterlassen, daß eine individuelle Entgegennahme des Anrufes nicht möglich ist, sei es durch Überlastung oder Abwesenheit des Abfragepersonals.

Von Nachteil der vorbeschriebenen Systeme ist insbesondere der zum Teil immense Aufwand, die für eine Informationsvermittlung benötigten Informationen aufzubereiten und für das Informationsvermittlungssystem, die Telekommunikationsanlage oder dergleichen zur Verfügung zu stellen. So sind die zu gegebenen Anlässen in das Informationsvermittlungssystem, die Telekommunikationsanlage oder dergleichen einzuspielenden Informationen in Abhängigkeit ihres jeweiligen Informationsgehalts in regelmäßigen Abständen auf Richtigkeit zu überprüfen und im Falle notwendiger Änderungen manuell zu berichtigen oder gegebenenfalls auszutauschen. Dieser Überprüfungsaufwand hat sich als nicht nur äußerst aufwendig, sondern auch als fehlerträchtig herausgestellt, was insbesondere dann von Nachteil ist, wenn für mehrere, kommunikationstechnisch unter Umständen miteinander verbundene Informationsvermittlungssysteme, Telekommunikationsanlagen oder dergleichen gleiche oder zum Teil unterschiedliche Informationen zeitgleich zur Verfügung gestellt werden sollen.

Ausgehend vom Vorbeschriebenen ist es **Aufgabe** der Erfindung, unter Vermeidung der vorgenannten Nachteile ein Verfahren anzugeben, mit dem auf einfache Weise Informationen für Informationsvermittlungssysteme, Telekommunikationsanlage oder dergleichen bereitgestellt werden können und welches hilft, den Wartungsaufwand sowohl hinsichtlich der Bereitstellung der Informationen als auch bezüglich ihrer inhaltlichen Überprüfung zu verringern. Zudem soll mit der Erfindung eine Vorrichtung zur Durchführung des Verfahrens vorgeschlagen werden.

Zur **Lösung** dieser Aufgabe wird mit der Erfindung vorgeschlagen ein Verfahren zur Bereitstellung von Informationen für ein Informationsvermittlungssystem, eine Telekommunikationsanlage oder dergleichen, bei dem gemäß vorgebbarer Parameter die von einer zentral angeordneten Speichereinheit zur Verfügung gestellten Informationen auf Anfrage wunschgemäß abgerufen, unter Verwendung eines entsprechenden Speichermediums zwischengespeichert und bedarfsgerecht in das Informationsvermittlungssystem, die Telekommunikationsanlage oder dergleichen eingespielt werden.

Von Vorteil bei der Umsetzung des erfindungsgemäßen Verfahrens ist die zentrale zur Verfügungstellung von Informationen, die auf entsprechende Anfrage wunschgemäß abgerufen und in das anfragende Informationsvermittlungssystem, die Telekommunikationsanlage oder dergleichen eingespielt werden können. Auf diese Weise läßt sich unter nur geringem Aufwand eine Aktualisierung der für die einzelnen Informationsvermittlungssysteme, Telekommunikationsanlagen und dergleichen bereitstehenden Informationen durchführen, was im Rahmen einer Identitätsüberprüfung auch einen inhaltlichen Abgleich der einzelnen Informationen mit einschließt. Dabei ist das erfindungsgemäße Verfahren insbesondere bei dem Einsatz unterschiedlicher und voneinander getrennter Informationsvermittlungssysteme, Telekommunikationsanlagen oder dergleichen von Vorteil, da diese jeweils unabhängig voneinander von zentraler Stelle aus mit Informationen bedient werden können und auch eine Wartung der einzelnen Systeme, Anlagen oder dergleichen von zentraler Stelle aus möglich ist. Anders als aus dem Stand der Technik vorbekannt, ist es mit dem erfindungsgemäßen Verfahren nicht mehr erforderlich, einzelne Informationsvermittlungssysteme bzw. einzelne Telekommunikationsanlagen jeweils separat und unabhängig voneinander mit jeweils wunschgemäßen Informationen zu versehen und eine entsprechende Einzelwartung durchzuführen. Das erfindungsgemäße Verfahren eröffnet so eine weniger zeitund kostenaufwendigere Handhabung, was nicht nur aufgrund wirtschaftlicher Erwägungen von Vorteil ist, auch kann der inhaltlichen Falscheinspielung wirkungsvoll vorgebeugt werden.

Ausgangspunkt für die Durchführung des erfindungsgemäßen Verfahrens ist eine vorzugsweise zentral angeordnete Speichereinheit. Bereitgestellt werden durch diese für alle kommunikationstechnisch angeschlossenen Informationsvermittlungssysteme, Telekommunikationsanlagen oder dergleichen sämtliche dem Grunde nach zur Verfügung stehenden Informationen in digitaler Form. Dabei kann es sich bei den zur Verfügung gestellten Informationen um Textinformationen in Form von Ansagen, um reine Musikeinspielungen oder um eine Kombination aus Musikeinspielungen und Textinformationen handeln. Auf Anfrage eines Informationsvermittlungssystems, einer Telekommunikationsanlage oder dergleichen wird eine ausgewählte Information wunschgemäß abgerufen und in Kopie von der zentral angeordneten Speichereinheit an ein separates und dem anfragenden System oder der anfragenden Anlage zugeordnetes Speichermedium zur Zwischenspeicherung übertragen. Die angefragte Information existiert infolge dieses Verfahrensschritt somit im Original weiterhin auf der Speichereinheit sowie in Kopie auf dem Speichermedium des jeweils zugeordneten Systems bzw. der jeweils zugeordneten Anlage. Bedarfsgerecht kann nunmehr die Einspielung der ausgesuchten Information in das Informationsvermittlungssystem, die Telekommunikationsanlage oder dergleichen erfolgen, wobei die Information dem zur Zwischenspeicherung dienenden Speichermedium ausgelesen und dem anfragenden System bzw. der anfragenden Anlage zugeführt wird. Dieser Vorgang des Einspielens kann beliebig häufig wiederholt werden, wobei das anfragende Informationsvermittlungssystem bzw. die anfragende Telekommunikationsanlage jedesmal auf die im Speichermedium zwischengespeicherte Information zurückgreift. Ergibt sich beispielsweise infolge eines Zeitablaufes eine Überalterung der im Speichermedium zwischengespeicherte Information, so ist diese zunächst gegen eine auf der zentralen Speichereinheit abgelegten neueren Information auszutauschen, bevor diese dann in ein anfragendes Informationsvermittlungssystem oder eine anfragende Telekommunikationsanlage eingespielt werden kann.

Für den Fall, daß mehrere Informationsvermittlungssysteme, mehrere Telekommunikationsanlagen oder dergleichen kommunikationstechnisch mit ein und demselben Speichermedium zur Zwischenspeicherung von Informationen angeschlossen sind, ergibt sich mit dem erfindungsgemäßen Verfahren der Vorteil des verringerten Aufwands für die Informationsbereitstellung einerseits sowie der Informationswartung andererseits. Die gemeinsame Bereitstellung nur eines Speichermediums für mehrere Informationsvermittlungssysteme bzw. mehrere Telekommunikationsanlagen stellt nämlich in wirkungsvoller Weise sicher, daß für alle angeschlossenen Systeme bzw. Anlagen identische Informationen zur Verfügung stehen und daß es nicht in ungewollter Weise zur Bereitstellung unterschiedlicher Informationsversionen für die jeweils angeschlossenen Systeme bzw. Anlagen kommen kann. Diese dem erfindungsgemäßen Verfahren immanente Absicherung erweist sich insbesondere dann von Vorteil, wenn die für die angeschlossenen Informationsvermittlungssysteme, Telekommunikationsanlagen oder dergleichen zur Verfügung gestellten Informationen in zeitlich aufeinanderfolgenden Abständen modifiziert werden sollen. Auf einfache Weise ist in einem solchen Fall lediglich die erneuerte Information von der zentral angeordneten Speichereinheit an das als Zwischenspeicher dienende Speichermedium zu übertragen, so daß nach Abschluß einer solchen Informationsübertragung sämtlichen an das Speichermedium angeschlossenen Systemen bzw. Anlagen die erneuerte Information gleichsam zur Verfügung steht. Fehlerhafte Informationseinspielungen in das ein oder andere Systeme bzw. die ein oder andere Anlage kann so in vorteilhafterweise vermieden werden.

Gemäß einem weiteren Merkmal der Erfindung erfolgt ein Abrufen der Informationen automatisch. Ein automatisches Abrufen ist dabei insofern von Vorteil, als daß der Bereitstellungs- und Wartungsaufwand weiterhin reduziert werden kann. Für das automatische Abrufen der Informationen kann beispielsweise eine Zeitsteuerung vorgesehen sein, mit welcher vorbestimmbar ist, zu welchen Zeitpunkten ein Abrufen der Informationen von der zentral angeordneten Speichereinheit erfolgen soll. Einem Abrufen der Information vorgeschaltet, kann zunächst ein Versionenvergleich zwischen der auf der zentral angeordneten Speichereinheit vorhandenen Information einerseits und der im Speichermedium zwischengespeicherten Information andererseits durchgeführt werden. Bei Identität der Versionen unterbleibt ein Abrufen, wohingegen bei festgestelltem Versionenunterschied die auf dem Speichermedium vorhandene alte Informationsversion gelöscht wird und durch entsprechenden Abruf der von der zentral angeordneten Speichereinheit zur Verfügung gestellten neuen Information ersetzt wird.

Gemäß einem weiteren Merkmal der Erfindung erfolgt die Informationsübertragung zwischen zentraler Speichereinheit einerseits und Speichermedium andererseits via Datenfernübertragung, vorzugsweise via Internet. Vorgesehen sein kann in diesem Zusammenhang beispielsweise eine bei einem Dienstleister zentral geführte Speichereinheit. Diese ist mittels Datenfernübertragung kommunikationstechnisch mit dem kundenseitig vorgesehenen Speichermedium verbunden. Auf entsprechende Anfrage kann sodann wunschgemäß über die Datenfemübertragung die vom Kunden angeforderte Information von der Speichereinheit zum Speichermedium übertragen werden. Von Vorteil bei dieser Ausgestaltung ist ferner, daß räumlich und körperlich voneinander völlig unabhängige Informationsvermittlungssysteme, Telekommunikationsanlagen und dergleichen an ein und dieselbe zentral angeordnete Speichereinheit angeschlossen werden können, was insbesondere für Kunden von Vorteil ist, die für eine kommunikationstechnische Anbindung an die Umwelt mehrere voneinander zum Teil auch räumlich getrennte Telekommunikationsanlagen oder Informationsvermittlungssysteme betreiben. Genannt seien hier beispielsweise Einkaufsmärkte, wie beispielsweise Baumärkte, die einer gemeinsamen, übergeordneten Marktkette angehörend an unterschiedlichen Stellen im Bundesgebiet angesiedelt sind und deren Betreiber zu ein und demselben Zeitpunkt über ein im jeweiligen Baumarkt angeordnetes Informationsvermittlungssystem identische Informationen, beispielsweise über Sonderangebote, an ihre Kunden weitergeben möchten. Ein weiteres Beispiel ist die Verwendung des erfindungsgemäßen Verfahrens für die Bereitstellung von Ansagetexten zur Verwendung in Telekommunikationsanlagen, bei welchen beispielsweise täglich funktions- oder bereichsbezogen neu aufbereitete Ansagetexte zur Überbrückung von Wartezeiten zur Verfügung gestellt werden sollen.

Gemäß einem weiteren Merkmal der Erfindung werden die von der Speichereinheit zur Verfügung gestellten Informationen einzeln oder gebündelt abgerufen. Je nach Datenvolumen kann so eine zeitoptimierte Informationsanfrage durchgeführt werden. Vorzugsweise liegen die Informationsdaten in Form sogenannter WAV-Daten, MP3-Daten oder sonstiger Windows kompatibler Daten vor, so daß eine Datenübertragung unter Verwendung herkömmlicher Software durchgeführt werden kann.

Gemäß einem weiteren Merkmal der Erfindung werden die Informationen vor einer Einspielung in die Telekommunikationsanlage oder das Informationsvermittlungssystem akustisch miteinander vermischt. Hierdurch können akustisch weiche Übergänge zwischen einzelnen Informationen, d.h. einzelnen Akustikdateien, geschaffen werden und auch ist es möglich, Textinformationen beispielsweise mit Musikeinspielungen zu untermalen. Eine solche Datenvermischung erfolgt dabei in vorteilhafterweise automatisch, so daß auch diesbezüglich eine Verringerung des Bereitstellungs- und Wartungsaufwandes erreicht werden kann.

Vorrichtungsseitig wird zur **Lösung** der vorgenannten Aufgabe vorgeschlagen eine Vorrichtung zur Bereitstellung von Informationen für ein Informationsvermittlungssystem, eine Telekommunikationsanlage oder dergleichen, umfassend einen Mikroprozessor, ein Speichermedium sowie für eine kommunikationstechnische Verbindung mit einer zentral angeordneten Speichereinheit einerseits und einem Informationsvermittlungssystem, einer Telekommunikationsanlage oder dergleichen andererseits entsprechend ausgebildete Kommunikationsanschlüsse, wobei gemäß vorgebbarer Parameter die von der zentral angeordneten Speichereinheit zur Verfügung gestellten Informationen auf Anfrage des Mikroprozessors wunschgemäß abrufbar, mittels des Speichermediums zwischenspeicherbar und bedarfsgerecht in das Informationsvermittlungssystem, die Telekommunikationsanlage oder dergleichen einspielbar sind.

Vorgebbare Parameter können in diesem Zusammenhang beispielsweise Dateiname, Dateidatum, Speicheradresse oder dergleichen sein, wobei infolge der Anfrage durch den Mikroprozessor wunschgemäß entsprechende Informationen, d.h. Daten, von der zentral angeordneten Speichereinheit in Kopie heruntergeladen und an das vorrichtungsseitig vorgesehene Speichermedium übertragen werden. Eine solche Übertragung erfolgt bedarfsgerecht, wobei sich diese beispielsweise infolge zeitlicher Vorgaben ergeben kann.

Gemäß einem weiteren Merkmal der Vorrichtung ist vorgesehen, daß ein Abrufen der Informationen automatisch durchführbar ist. Eine derartige Ausgestaltung ist dabei insofern von Vorteil, als daß die erfindungsgemäße Vorrichtung ohne zusätzlichen manuellen Eingriff Informationen für das Informationsvermittlungssystem, die Telekommunikationsanlage oder dergleichen bereitstellt, so daß der zeitliche wie auch finanzielle Aufwand für die Informationsbereitstellung und -wartung auf ein Minimum reduziert ist.

Gemäß einem weiteren Merkmal der Erfindung sind die Informationen einzeln oder gebündelt abrufbar, wobei sowohl ein Abruf als auch ein Zwischenspeichern der Informationen zeitgesteuert ausführbar ist. So kann beispielsweise vorgesehen sein, daß eine für eine Telekommunikationsanlage täglich zu erneuernde, d.h. abzudatende Textinformation zu einem vorbestimmten Zeitpunkt, beispielsweise sieben Uhr morgens, kundenseitig angefragt und die zu diesem Zeitpunkt auf der zentralen Speichereinheit vorhandene neueste Textversion sodann an das entsprechende Speichermedium übertragen wird. Im weiteren Tagesablauf kann dann zu einem weiteren vorbestimmten Zeitpunkt, beispielsweise 13 Uhr mittags, eine weitere Informationsabfrage erfolgen, womit auf einfache und fehlerreduzierende Art und Weise wirkungsvoll sichergestellt ist, daß zwei voneinander unterscheidbare Textinformationen in allen angeschlossenen Telekommunikationsanlagen vormittags und nachmittags zeitgenau eingespielt werden.

Gemäß einem weiteren Merkmal der Erfindung weist die erfindungsgemäße Vorrichtung eine Echtzeituhr und/oder einen Echtzeitkalender auf. Der Einsatz einer Echtzeituhr sowie einer Echtzeitdatumsverwaltung ermöglicht eine zeitlich genaue und vor allem von anderen Einrichtungen unabhängige Verwaltung und Steuerung der erfindungsgemäßen Vorrichtung.

Gemäß einem weiteren Merkmal der Erfindung weist die Vorrichtung eine USB-Schnittstelle zur Datenübertragung auf. Selbstredend sind dem in der vorschlagsgemäßen Schnittstelle auch andere Schnittstellen möglich, doch hat sich die USB-Schnittstelle als insbesondere komfortabel erwiesen, da sie zum einen einen kompatiblen Anschlußstandard darstellt als auch zum anderen eine hohe Übertragungsrate ermöglicht.

Gemäß einem weiteren Merkmal der Erfindung ist der Mikroprozessor ein DSP-Prozessor. Diese Ausgestaltung erweist sich als insbesondere dann vorteilhaft, wenn das vorrichtungsgemäße Speichermedium via Internet an die zentral angeordnete Speichereinheit kommunikationstechnisch angeschlossen ist, denn fungiert ein DSP-Prozessor zugleich auch als Modem, so daß es bei Verwendung eines solchen Prozessors für den Aufbau einer Internet-Verbindung zwischen dem Speichermedium und der Speichereinheit nicht erforderlich ist, hardwaretechnisch ein zusätzliches Modem vorzusehen. Zudem bietet ein DSP-Prozessor hinreichende Leistungsmerkmale, um die anfallende Datenmenge in zufriedenstellender Zeit zu verarbeiten.

Gemäß einem weiteren Merkmal der Erfindung ist das Speichermedium ein Festspeicher. Die Verwendung eines Festspeichers stellt sicher, daß auch nach einem Stromausfall die von der zentral angeordneten Speichereinheit übertragenen Daten weiterhin zur Verfügung stehen, und daß die erfindungsgemäße Vorrichtung bedarfsgerecht weiter betrieben werden kann, sobald die extreme Stromversorgung wieder hergestellt ist. Zur Aufrüstung des Speicherplatzbedarfes kann eine Speichererweiterung mittels Smart-Media-Karten vorgenommen werden.

Zudem kann mit der erfindungsgemäßen Vorrichtung vorgesehen sein, einen zentral verwalteten Anrufbeantworter zur Verfügung zu stellen, der gemeinschaftlich für die angeschlossenen Informationsvermittlungssysteme, Telekommunikationsanlagen oder dergleichen verwendet werden kann. Eine solche Funktion ist jedoch rein optional.

Insgesamt wird mit dem erfindungsgemäßen System ein Verfahren sowie eine Vorrichtung vorgeschlagen, bei welchem die auf einer zentral angeordneten Speichereinheit hinterlegten Informationen in Form von Text- oder Musikinformationen an dezentral angeordnete Speichermedien übertragen werden, wobei eine Anfrage seitens der dezentral angeordneten Speichermedien infolge vorgebbarer Parameter erfolgt. Kommunikationstechnisch angeschlossen sind an die dezentralen Speichermedien ein oder mehrere Informationsvermittlungssysteme, Telekommunikationsanlagen oder dergleichen. Diesen Systemen bzw. Anlagen stehen die zentral verwalteten Informationen zur Verfügung, sobald diese gemäß der vorgebbaren Parameter an das jeweils dezentrale Speichermedium übergeben sind. Ein solches Überspielen der Informationen an die dezentralen Speichermedien kann automatisch, beispielsweise durch Zeitvorgabe erfolgen. Andere vorgebbare Parameter können Dateiname, Dateigröße, Dateiversion, Einspielqualität, Dateiformat oder dergleichen sein.

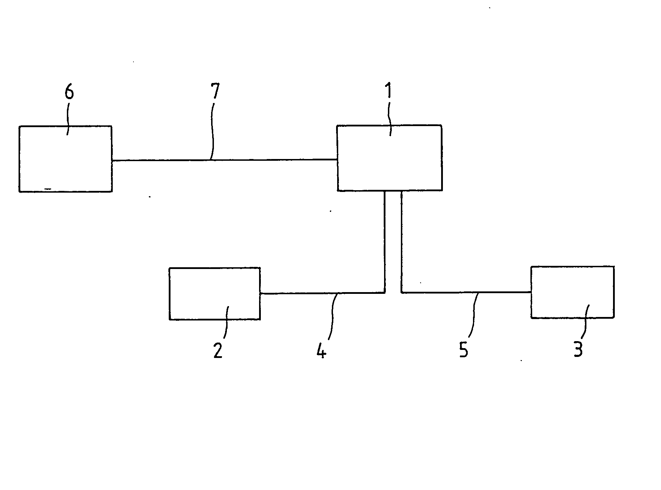

Weitere Merkmale und Vorteile der Erfindung ergeben sich aus der Beschreibung anhand der Figur. Dabei zeigt Fig. 1 in schematischer Darstellung einen Ablaufplan zur Durchführung des erfindungsgemäßen Verfahrens.

Dargestellt ist in Fig. 1 in Form eines schematischen Schaltplans die erfindungsgemäße Vorrichtung 1. Diese ist mittels entsprechender Kabel 4 und 5 an ein Informationsvermittlungssystem 2 einerseits und eine Telekommunikationsanlage 3 andererseits angeschlossen. Das innerhalb der Vorrichtung 1 vorgesehene und in der Figur nicht näher dargestellte Speichermedium hält sowohl für das Informationsvermittlungssystem 2 als auch für die Telekommunikationsanlage 3 entsprechende Informationen in Form von Textinformationen, Musikeinspielungen oder Kombinationen hieraus zur Verfügung, die bedarfsgerecht eingespielt werden können.

Via Internet 7 ist die Vorrichtung 1 kommunikationstechnisch an eine zentral angeordnete Speichereinheit 6 gekoppelt, die beispielsweise dienstleisterseitig angeordnet ist und auf die der Kunde bedarfsgerecht über das Internet 7 zugreifen und Informationen wunschgemäß abrufen und auf das Speichermedium der Vorrichtung 1 übertragen kann.

Im nachfolgenden sollen einige Anwendungsbeispiele der erfindungsgemäßen Vorrichtung sowie für die Durchführung des erfindungsgemäßen Verfahrens im Detail beschrieben werden:

### Beispiel 1: automatische Aktualisierung von Textnachrichten für die Einspielung in die Warteschleife einer Telekommunikationsanlage.

Durch die Möglichkeit des eigenständigen und automatischen Internet-Zugriffs durch das erfindungsgemäße System können aktuelle Informationen zeitnah vom Server, d.h. der zentralen Speichereinheit 6 des Dienstleisters heruntergeladen und der erfindungsgemäßen Vorrichtung 1 zur Verfügung gestellt werden. Hierdurch können Anwendungen möglich werden, die bei herkömmlichen Systemen mit Speichercard- oder CD-Bestückung nicht realisiert werden können. So z.B. die Ansage von aktuellen Wetterinformationen mit beliebiger regionaler Eingrenzung, der Wiedergabe aktueller Nachrichten aus vereinbarten Themengebieten oder die Einspielung internen Unternehmens-News, auch z.B. Börsenkurse oder Neuproduktinformationen. Besonders vorteilhaft ist dabei, daß die jeweils aktuell geladene Ansage vollautomatisch mit der in der Vorrichtung 1 bereits gespeicherten Musik gemischt werden können, d.h. weiche Einblendungen der Einsagen in die unabhängig hiervon eingespielte Musik generiert werden können.

### Beispiel 2: "corporate sound distribution"

Mit dem erfindungsgemäßen System können Firmen gemäß dem Konzept des "corporate sound distribution" Einspielungen von z.B. Musikjingles, Informationsansagen über das Unternehmen und seiner Produkte sowie aktuelle Firmeninformationen in die Warteschleifen ihrer Niederlassungen und auch in die ihrer Kundenkreise einspeisen. Neuigkeiten können dabei von heute auf morgen verarbeitet werden, ohne daß beim Update auf die Mitwirkung der vor Ort zuständigen Personen vertraut werden müßte. Unabhängig von manuellen Eingriffen ermöglicht das erfindungsgemäße Verfahren nämlich die selbständige und zuverlässige Aktualisierung gemäß vorgebbarer Randbedingungen. Unter Verwendung der erfindungsgemäßen Vorrichtung kann dabei von zentraler Stelle aus bestimmt werden, welche Einspielung in den verteilten Standorten zu hören ist. Ein Update ist beispielsweise täglich, wöchentlich, monatlich oder unregelmäßig nach Bedarf möglich. Hierzu genügt eine Absprache mit dem die zentrale Speichereinheit pflegenden Dienstleister. Auch die regionale Diversifizierung der Einspielungen ist durch entsprechende Strukturierung unterschiedlicher Angebots-Codes unter Verwendung der erfindungsgemäßen Vorrichtung möglich.

### Beispiel 3: Verwendung der erfindungsgemäßen Vorrichtung als Call-Center oder Info-Hotline

Mit der erfindungsgemäßen Vorrichtung 1 können erweiterte Vermittlungsfunktionen wie beispielsweise Besetzterkennung, alternatives Vermittlungsziel, mehrstufige automatische Vermittlung, Fax-Erkennung und dergleichen zur Verfügung gestellt werden, womit wichtige Grundfunktionen einer Call-Center-Anrufverteilung bereitstehen. Beispielsweise kann an einer Hotline eine Vor-Abfrage des gewünschten Themenbereichs stattfinden, woraufhin dann eine gezielte Vermittlung in eine jeweilige Anrufgruppe stattfindet. Wenn hier alle Plätze besetzt sind, erfolgt eine entsprechende Textmeldung, die Alternativen wie "weiter warten", "Nachricht hinterlassen" u. a. aufzeigt. Nach einem erneuten erfolglosen Vermittlungsversuch kann dann wiederum anders reagiert werden. Standard-Informationen können auch als Sprachansagen direkt vom Anrufer aus dem erfindungsgemäßen System abgerufen werden. Hier bringt eine flexible Script-Programmierung viele Vorteile für den Anwender, denn wird es hierdurch möglich, hierarchische Verkettungen von Informationsansagen vorzusehen. Durch die integrierte Datums-Uhrzeit-Funktion sind alle Abläufe automatisch zeitabhängig steuerbar, z.B. auch die Umschaltung auf einen automatischen Informationsdienst außerhalb der persönlichen Call-Center-Erreichbarkeit.

### Beispiel 4: Das erfindungsgemäße System als Komplettsystem für Ansagen, Wartemusik und Anrufbeantworter.

Die Standard-Funktionen von Musik und Ansagen an einer Telefonanlage bestehen in der Regel mindestens aus einer automatischen Begrüßungsansage, einer Wartezeit-Einspielung sowie einem Anrufbeantworter. Mit dem erfindungsgemäßen System steht nun ein Gerät in der jeweils benötigten Größenordnung (Kanalzahl) zur Verfügung, das für vergleichsweise niedrige Kosten ein Ansage-Musik-System zur Verfügung stellt, das auf einfache Weise mit der Funktionalität eines Anrufbeantworters ausgerüstet werden kann. Ein zusätzlicher Vorteil ist die Möglichkeit der automatisch zeitgesteuerten Aktivierung, einschließlich des Ansagewechsels, beispielsweise für Feiertage. Die professionellen Einspielmöglichkeiten des erfindungsgemäßen Systems ermöglichen dabei mit Vorteil auch für den "einfachen" Anrufbeantworter eine optimale Sprachqualität.

### Bezugszeichenliste

- 1: Vorrichtung
- 2: Informationsvermittlungssystem
- 3: Telekommunikationsanlage
- 4: Kabel
- 5: Kabel
- 6: zentrale Speichereinheit
- 7: Internet

## Patentansprüche

1. Verfahren zur Bereitstellung von Informationen für ein Informationsvermittlungssystem, eine Telekommunikationsanlage oder dergleichen, bei dem gemäß vorgebbarer Parameter die von einer zentral angeordneten Speichereinheit zur Verfügung gestellten Informationen auf Anfrage wunschgemäß abgerufen, unter Verwendung eines entsprechenden Speichermediums zwischengespeichert und bedarfsgerecht in das Informationsvermittlungssystem, die Telekommunikationsanlage oder dergleichen eingespielt werden.

2. Verfahren nach Anspruch 1, **dadurch gekennzeichnet, daß** ein Abrufen der Informationen automatisch erfolgt.

3. Verfahren nach Anspruch 1 oder 2, **dadurch gekennzeichnet, daß** die Informationsübertragung zwischen zentraler Speichereinheit einerseits und Speichermedium andererseits via Datenfernübertragung, vorzugsweise via Internet, erfolgt.

4. Verfahren nach einem der Ansprüche 1 bis 3, **dadurch gekennzeichnet, daß** ein Abrufen und Zwischenspeichern der Informationen zeitgesteuert durchgeführt wird.

5. Verfahren nach einem der vorhergehenden Ansprüche, **dadurch gekennzeichnet, daß** die Informationen einzeln oder gebündelt abgerufen werden.

6. Verfahren nach einem der vorhergehenden Ansprüche, **dadurch gekennzeichnet, daß** die Informationen vor einer Einspielung in die Telekommunikationsanlage oder das Informationsvermittlungssystem automatisch miteinander akustisch vermischt werden.

7. Vorrichtung zur Bereitstellung von Informationen für ein Informationsvermittlungssystem, eine Telekommunikationsanlage oder dergleichen, umfassend einen Mikroprozessor, ein Speichermedium sowie für eine kommunikationstechnische Verbindung mit einer zentral angeordneten Speichereinheit einerseits und einem informationsvermittlungssystem, einer Telekommunikationsanlage oder dergleichen andererseits entsprechend ausgebildete Kommunikationsanschlüsse, wobei gemäß vorgebbarer Parameter die von der zentral angeordneten Speichereinheit zur Verfügung gestellten Informationen auf Anfrage des Mikroprozessors wunschgemäß abrufbar, mittels des Speichermediums zwischenspeicherbar und bedarfsgerecht in das Informationsvermittlungssystem, die Telekommunikationsanlage oder dergleichen einspielbar sind.

8. Vorrichtung nach Anspruch 7, **dadurch gekennzeichnet, daß** ein Abrufen der Informationen automatisch durchführbar ist.

9. Vorrichtung nach Anspruch 7 oder Anspruch 8, **dadurch gekennzeichnet, daß** ein Abrufen und Zwischenspeichern der Informationen zeitgesteuert durchführbar ist.

10. Vorrichtung nach einem der Ansprüche 7 oder 8 oder 9, **dadurch gekennzeichnet, daß** die Informationen einzeln oder gebündelt abrufbar sind.

11. Vorrichtung nach einem der Ansprüche 7 bis 10, **dadurch gekennzeichnet, daß** diese eine Echtzeituhr und/oder einen Echtzeitkalender aufweist.

12. Vorrichtung nach einem der Ansprüche 7 bis 11, **dadurch gekennzeichnet, daß** diese über eine USB-Schnittstelle zur Datenübertragung aufweist.

13. Vorrichtung nach einem der Ansprüche 7 bis 12, **dadurch gekennzeichnet, daß** der Mikroprozessor ein DSP-Prozessor ist.

14. Vorrichtung nach einem der Ansprüche 7 bis 13, **dadurch gekennzeichnet, daß** das Speichermedium ein Festspeicher ist.
